# EUROPÄISCHE PATENTSCHRIFT

(11) **EP 1 235 496 B1**
(45) Veröffentlichungstag und Bekanntmachung des Hinweises auf die Patenterteilung: **04.08.2004**
(21) Anmeldenummer: 00971111.0
(22) Anmeldetag: 25.10.2000
(51) Int. Cl.: A46B 17/02, A46B 13/08, A61C 17/22

(54) **ZAHNBÜRSTE**
TOOTHBRUSH
BROSSE A DENTS

(30) Priorität: 22.11.1999 CL 27161999
(43) Veröffentlichungstag der Anmeldung: 04.09.2002
(73) Patentinhaber: Egger, Engelbert, Casilla 30, Temuco (CL); Bregar, Michael, 9611 Noetsch (AT); Urbizu de Cabo, Ramon Pedro, Temuco (CL)
(72) Erfinder: URBIZU DE CABO, Ramon, Pedro, Temuco (CL)
(74) Vertreter: Hübscher, Helmut, Dipl.-Ing.
(86) Internationale Anmeldenummer: PCT/AT2000/000280
(87) Internationale Veröffentlichungsnummer: WO 2001/037702

(56) Entgegenhaltungen:
- FR-A- 910 868
- US-A- 1 509 720
- US-A- 5 735 691
- US-A- 5 822 821

## Beschreibung

Die Erfindung bezieht sich auf eine Zahnbürste mit einem Griff, mit einem Bürstenkopf, der über einen Halsteil mit dem Griff verbunden ist, und mit einer den Halsteil mit Bewegungsspiel umgreifenden Führung.

Der Erfolg des Zähneputzens, insbesondere der Backenzähne, hängt vor allem von einer genauen Führung des Bürstenkopfes entlang der Innen- und Außenseite der Backenzähne ab, wobei die Bürstenborsten unter einer gleichzeitigen halben Drehung des Bürstenkopfes um die Achse des Halsteiles der Zahnbürste vom Zahnfleisch zur Zahnkrone geführt werden sollen. Diese selbst bei elektrisch angetriebenen Bürstenköpfen von Hand aus vorzunehmenden Putzbewegungen sind schwierig, weil sich weder für die Hand noch für die Zahnbürste Abstützpunkte anbieten, so daß der Bürstenkopf häufig abgleitet und das Zähneputzen anstrengend und fehlerhaft wird. In diesem Zusammenhang ist zu bedenken, daß zur richtigen Führung einer üblichen Zahnbürste der Ellbogen angehoben werden muß, was ermüdend ist und dazu Anlaß gibt, daß die für die Führung des Bürstenkopfes entlang der Backenzähne vorteilhafte Drehbewegung der Zahnbürste nicht mit der erforderlichen Genauigkeit unter einer ausreichenden Druckanwendung ausgeführt wird. Dies gilt vor allem für die Innenseite der Backenzähne, weil der Bürstenkopf zwar an der Außenseite der Backenzähne noch eine die Führung der Zahnbürste unterstützende Anlage an der Wangeninnenseite findet, nicht aber auf der Innenseite der Backenzähne. Die besonderen Krümmungen des Halsteiles bekannter Zahnbürsten bringen in diesem Zusammenhang ebensowenig Vorteile, wie besondere Borstenanordnungen, weil es in erster Linie um die Einhaltung genauer Putzbewegungen entlang der Backenzähne geht, die daher von der Geschicklichkeit und Aufmerksamkeit des Putzers abhängen.

Um eine Zahnbürste mit von Hand aus um eine Längsachse drehbaren Bürstenkopf zu schaffen, ist es bekannt (US 1 509 720 A), die Zahnbürste im Bereich eines Halsteiles zwischen dem Bürstenkopf und einem Griff drehbar in einer Führung zu lagern, die mit einer Griffstange versehen ist, so daß die Griffstange mit einer Hand gehalten und der drehfest mit dem Griff der Zahnbürste verbundene Bürstenkopf mit der anderen Hand über den Zahnbürstengriff hin- und hergedreht werden kann. Die Handhabung einer solchen Zahnbürste ist allerdings schwierig, weil die Bewegung beider Hände koordiniert werden muß, was einer besonderen Geschicklichkeit zur genauen Führung des Bürstenkopfes bedarf.

Der Erfindung liegt somit die Aufgabe zugrunde, eine Zahnbürste der eingangs geschilderten Art so auszugestalten, daß der Zähneputzer eine wirksame Unterstützung bei der ordnungsgemäßen Handhabung der Zahnbürste erfährt, so daß ein guter Putzerfolg auch ohne besondere Geschicklichkeit und Aufmerksamkeit erreicht werden kann.

Die Erfindung löst die gestellte Aufgabe dadurch, daß die Führung ein Bißwiderlager bildet.

Da die den Halsteil der Zahnbürste mit Bewegungsspiel umgreifende Führung für die Zahnbürste ein Bißwiderlager bildet, kann die Zahnbürste in der Nähe des jeweils zu putzenden Zahnes in einfacher Weise so abgestützt werden, daß nicht nur eine genaue Führung des Bürstenkopfes entlang der Innen- und Außenseite der Backenzähne entscheidend erleichtert wird, sondern auch der erforderliche Druck auf die zu reinigenden Zahnflächen ohne ermüdende Kraftentfaltung ausgeübt werden kann. Voraussetzung hiefür ist, daß die Führung für den Halsteil der Zahnbürste selbst verschiebefest gegenüber den zu reinigenden Zähnen festgelegt werden kann, was durch die als Bißwiderlager ausgebildete Führung sichergestellt ist, die ja zwischen den Zähnen festgehalten wird. Durch eine Verlagerung dieses Bißwiderlagers zwischen den Zähnen kann stets ein für die Reinigung der einzelnen Zähne günstiger Verlauf des Halsteiles der Zahnbürste in der Führung erreicht werden.

Wird die Führung selbst als Bißwiderlager zwischen die Zähne genommen, so ist ein Durchführen der Zahnbürste zwischen den Zahnreihen durch die Führung hindurch zu den Innenseiten der Backenzähne einfach. Eine solche Aufnahme der Führung zwischen den Zähnen macht allerdings ein Putzen der Außenseite der Backenzähne schwierig, wenn von einem in seiner Grundform zylindrischen Führungskörper ausgegangen wird. Um auch für das Putzen der Außenseite der Backenzähne vorteilhafte Führungsbedingungen zu erreichen, kann die Führung einen vom Halsteil weggerichteten Halterungsansatz aufweisen, der für das Putzen der Außenseite der Zähne als Bißwiderlager dient, so daß die Führung außerhalb der Zahnreihen zu liegen kommt.

Obwohl die Führung für den Halsteil der Zahnbürste unterschiedlich ausgebildet sein kann, ergeben sich besonders einfache Konstruktionsverhältnisse, wenn die Führung eine Durchtrittsöffnung für den Halsteil bildet, so daß der Halsteil in der ihn umgreifenden Durchtrittsöffnung die notwendige Abstützung zum lagerichtigen Betätigen der Zahnbürste findet. Die Führung wird dabei im allgemeinen einen ringförmigen Grundkörper bilden, wobei die axiale Führungslänge der Durchtrittsöffnung kleiner als die Länge des Halsteiles sein soll, damit der Halsteil innerhalb der Durchtrittsöffnung axial hin- und herbewegt werden kann. Die Drehbewegung der Zahnbürste um die Achse des Halsteils bzw. der Durchtrittsöffnung ergibt sich von selbst. Soll der Bürstenkopf der Zahnbürste zusätzlich um eine Querachse verschwenkt werden, so kann in einfacher Weise für einen entsprechenden Schwenkwinkel gesorgt werden, wenn sich die Durchtrittsöffnung der Führung sowohl gegen den Bürstenkopf als auch gegen den Griff hin konisch erweitert.

Zur besseren Halterung der Führung zwischen den oberen und unteren Zahnreihen kann sie mit wenigstens einer Bißausnehmung versehen werden, die vorzugsweise an den üblichen Zahnverlauf angeglichen ist und einen guten Halt für die Zähne bietet. Für eine Halterung der Führung im Bereich der Durchtrittsöffnung verlaufen die Bißausnehmungen vorteilhaft quer zum Halsteil, weil in diesem Fall die Zahnbürste zwischen der oberen und unteren Zahnreihe zur Innenseite der Backenzähne geführt werden muß. Zum Putzen der Außenseite der Backenzähne ist für eine im wesentlichen in Richtung der Zahnreihen ausgerichtete Zahnbürstenführung zu sorgen, so daß eine Bißausnehmung auf dem Halterungsansatz in Richtung der Achse des Halsteiles vorteilhaft ist.

Ist die Durchtrittsöffnung der Führung in Umfangsrichtung geschlossen ausgebildet, so wird die Führung auf dem Halsteil der Zahnbürste unverlierbar gehalten. Um eine herkömmliche Zahnbürste mit einer erfindungsgemäßen Führung nachrüsten zu können oder die Möglichkeit zu schaffen, diese Führung von der Zahnbürste abzunehmen, kann die Führung eine umfangseitig offene Durchtrittsöffnung für den Halsteil bilden und unter einer elastischen Aufweitung der Durchtrittsöffnung quer zum Halsteil auf diesen aufgesteckt werden.

### Kurze Beschreibung der Zeichnungen

In der Zeichnung ist der Erfindungsgegenstand beispielsweise dargestellt. Es zeigen
- Fig. 1: eine erfindungsgemäße Zahnbürste in einer schematischen Seitenansicht,
- Fig. 2: diese Zahnbürste in einer Draufsicht,
- Fig. 3: die Führung für den Halsteil der Zahnbürste nach den Fig. 1 und 2 in einer Draufsicht in einem größeren Maßstab,
- Fig. 4: diese Führung in einer stirnseitigen Ansicht,
- Fig. 5: einen Schnitt nach der Linie V-V der Fig. 4,
- Fig. 6: eine der Fig. 4 entsprechende Darstellung einer Konstruktionsvariante einer Führung und
- Fig. 7: einen Schnitt nach der Linie VII-VII der Fig. 6.

### Bester Weg zur Ausführung der Erfindung

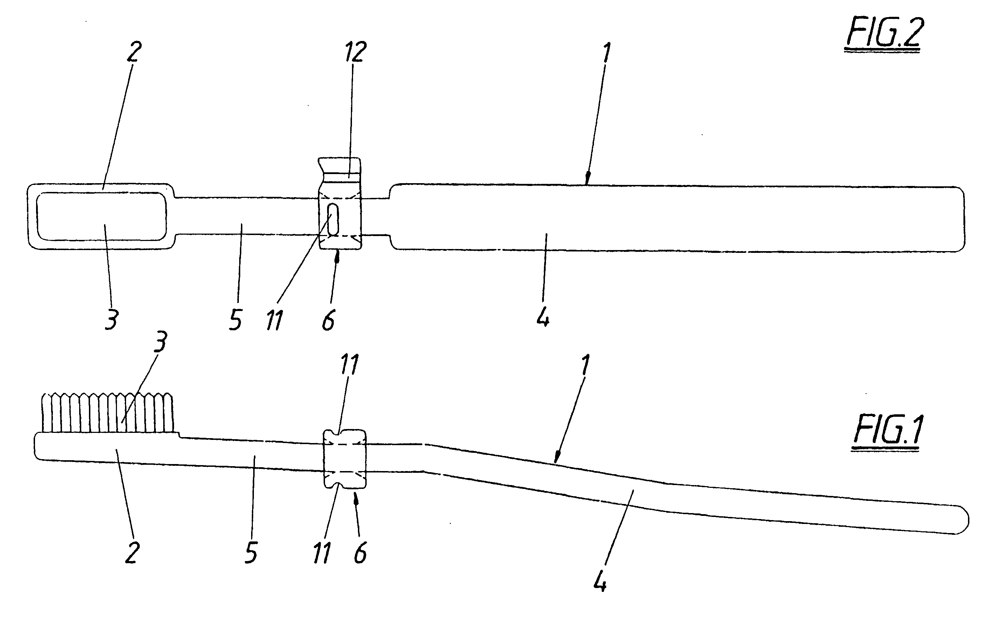

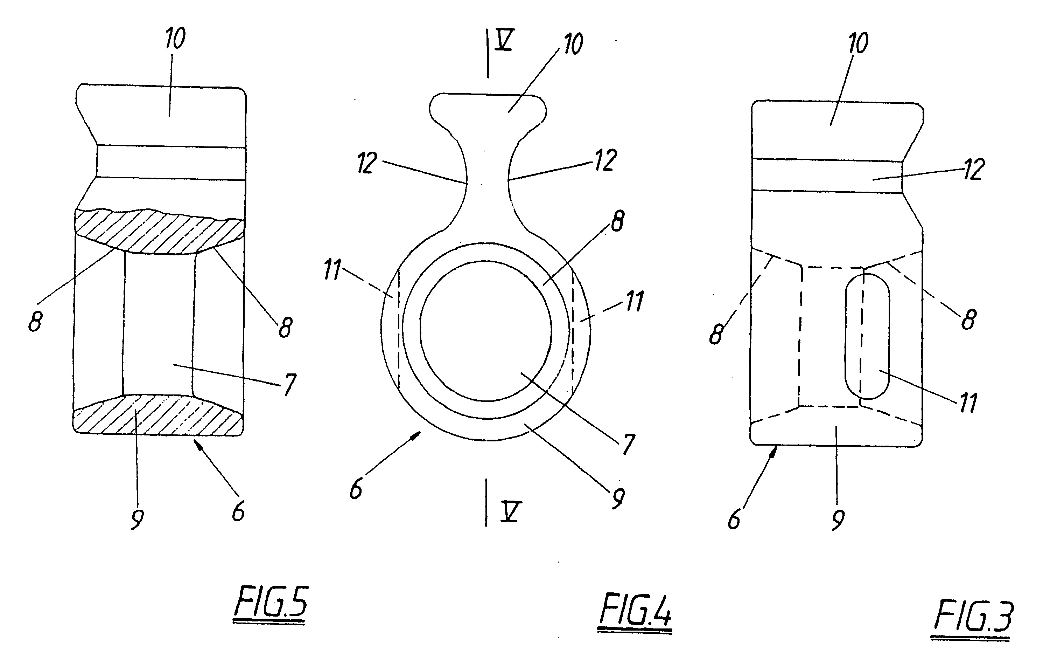

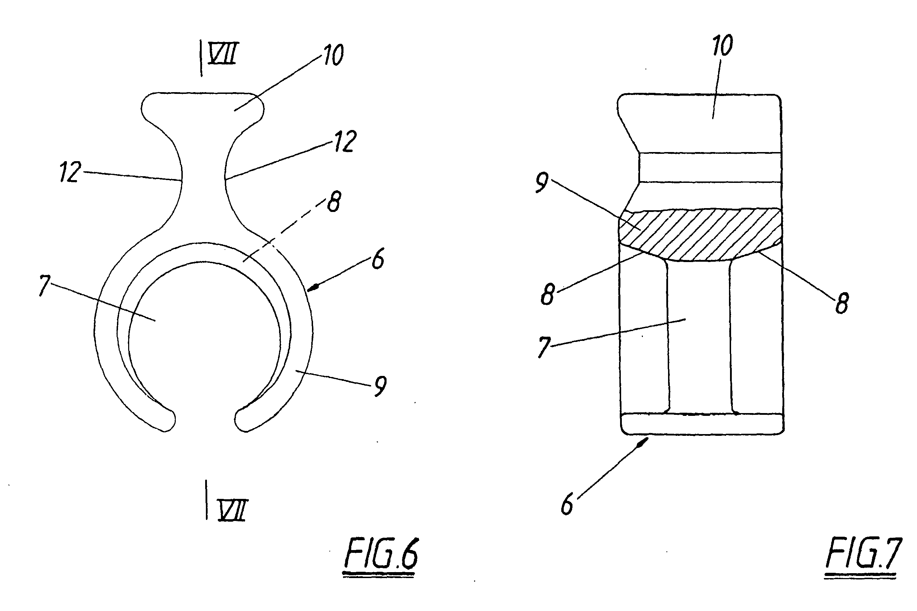

Die in den Fig. 1 und 2 schematisch dargestellte Zahnbürste weist einen Schaft 1 mit einem am vorderen Schaftende angeordneten Bürstenkopf 2 auf, dessen Borsten mit 3 bezeichnet sind. Der Schaft 1 ist in einen Griff 4 und einen sowohl vom Bürstenkopf 2 als auch vom Griff 4 abgesetzten Halsteil 5 unterteilt. Zum Unterschied von herkömmlichen Zahnbürsten dieser Art ist eine den Halsteil 5 mit Bewegungsspiel umgreifende Führung 6 vorgesehen, die ein Bißwiderlager bildet, so daß die Führung 6 zwischen den oberen und unteren Zahnreihen gehalten werden kann. Die Führung 6 weist eine Durchtrittsöffnung 7 für den Halsteil 5 auf, die gemäß den Fig. 3 bis 5 umfangseitig geschlossen ist, aber auch entsprechend der Ausführungsform nach den Fig. 6 und 7 umfangseitig offen ausgebildet sein kann. In beiden Ausführungsformen bildet die Durchtrittsöffnung 7 einen zylindrischen Mittelteil, von dem nach beiden Seiten konische Erweiterungen 8 ausgehen. Da die Führungslänge der Durchtrittsöffnung 7 kleiner als die axiale Länge des Halsteils 5 ist, kann der Halsteil 5 der Zahnbürste innerhalb der Durchtrittsöffnung 7 axial verschoben werden. Außerdem ist um die Achse der Durchtrittsöffnung 7 eine Drehbewegung des Halsteiles 5 möglich, der zusätzlich aufgrund der konischen Erweiterungen 8 allseits begrenzt verschwenkbar in der Führung 6 gehalten ist. Wird nun die Führung 6 als Bißwiderlager im Bereich der Vorderzähne zwischen der oberen und der unteren Zahnreihe festgehalten, so kann die Zahnbürste nur in dem durch die Führung 6 gegebenen Bewegungsbereich von Hand aus geführt werden, was wegen der Zahnbürstenabstützung in der unmittelbaren Nähe des Putzbereiches nicht nur ein genaues Ansetzen des Bürstenkopfes am zu putzenden Zahn, sondern auch das Einhalten vorteilhafter Putzbewegungen des Bürstenkopfes 2 erlaubt.

Wird der ringförmige Grundkörper 9 der Führung 6 zwischen den Vorderzähnen festgehalten, so führt die Durchtrittsöffnung 7 auf die Innenseite der oberen und unteren Zahnreihe, was das Putzen der Innenseiten der Backenzähne erheblich vereinfacht. Eine solche Lage der Führung 6 ist jedoch für das Putzen der Außenseite der Backenzähne ungeeignet. Aus diesem Grunde ist der ringförmige Grundkörper 9 mit einem vom Halsteil 5 weggerichteten Halterungsansatz 10 versehen, der ebenfalls ein Bißwiderlager darstellt und eine in Richtung der Zahnreihen verlaufende Führung 6 außerhalb der Zahnreihen ermöglicht, was eine vorteilhafte Voraussetzung für das Putzen der Außenseite von Backenzähnen ist. Die Halterung der Führung 6 zwischen den Zähnen kann durch Bißausnehmungen 11 und 12 erleichtert werden, die aufgrund ihrer Ausrichtung die jeweils günstigste Lage der Führung zwischen den Zähnen vorbestimmen. Zu diesem Zweck können beispielsweise die Bißausnehmungen 11 im Bereich des die Durchtrittsöffnung 7 bildenden Grundkörpers 9 quer zum Halsteil 5 verlaufen. Die Bißausnehmungen 12 am Halterungsansatz 10 sind jedoch in Richtung des Halsteiles 5 ausgerichtet, um das Putzen der Außenseite der Backenzähne mit einer entsprechend geführten Zahnbürste vornehmen zu können.

Wie die Fig. 1 und 2 zeigen, kann die Führung 6 unverlierbar auf dem Halsteil 5 der Zahnbürste angeordnet sein, insbesondere dann, wenn die Durchtrittsöffnung 7 entsprechend der Ausführungsform nach den Fig. 3 bis 5 umfangseitig geschlossen ausgebildet ist. Nach den Fig. 6 und 7 ist die Durchtrittsöffnung 7 für den Halsteil 5 der Zahnbürste jedoch umfangseitig offen, so daß die Führung 6 quer zum Halsteil 5 auf diesen aufgesteckt werden kann, und zwar unter einer elastischen Aufweitung der Durchtrittsöffnung 7. Eine solche Ausführungsform der Führung 6 läßt eine einfache Nachrüstung von herkömmlichen Zahnbürsten mit der erfindungsgemäßen Führung 6 zu.

Die Erfindung ist selbstverständlich nicht auf die dargestellten Ausführungsbeispiele beschränkt. So können die Zahnbürsten unterschiedliche Schaftformen und Borstenanordnungen aufweisen oder mit elektrisch angetriebenen Bürstenköpfen versehen sein, weil es lediglich um die Unterstützung der Handhabung der Zahnbürste durch eine zwischen den Zähnen festhaltbare Führung geht, die für die Handhabung der Zahnbürste vorteilhafte Bewegungen des Bürstenkopfes unterstützt.

## Patentansprüche

1. Zahnbürste mit einem Griff (4), mit einem Bürstenkopf (2), der über einen Halsteil (5) mit dem Griff (4) verbunden ist, und mit einer den Halsteil (5) mit Bewegungsspiel umgreifenden Führung (6), **dadurch gekennzeichnet, daß** die Führung (6) ein Bißwiderlager bildet.

2. Zahnbürste nach Anspruch 1, **dadurch gekennzeichnet, daß** die Führung (6) einen vom Halsteil (5) weggerichteten Halterungsansatz (10) aufweist.

3. Zahnbürste nach Anspruch 1 oder 2, **dadurch gekennzeichnet, daß** die Führung (6) eine Durchtrittsöffnung (7) für den Halsteil (5) bildet und daß die axiale Führungslänge der Durchtrittsöffnung (7) kleiner als die Länge des Halsteiles (5) ist.

4. Zahnbürste nach Anspruch 3, **dadurch gekennzeichnet, daß** sich die Durchtrittsöffnung (7) der Führung (6) sowohl gegen den Bürstenkopf (2) als auch gegen den Griff (4) hin konisch erweitert.

5. Zahnbürste nach einem der Ansprüche 1 bis 4, **dadurch gekennzeichnet, daß** die Führung (6) wenigstens eine Bißausnehmung (11, 12) aufweist.

6. Zahnbürste nach Anspruch 5, **dadurch gekennzeichnet, daß** die Bißausnehmungen (11) quer zum Halsteil (5) verlaufen.

7. Zahnbürste nach Anspruch 5 oder 6, **dadurch gekennzeichnet, daß** wenigstens eine Bißausnehmung (12) in Längsrichtung des Halsteiles (5) auf dem Halterungsansatz (10) vorgesehen ist.

8. Zahnbürste nach einem der Ansprüche 1 bis 7, **dadurch gekennzeichnet, daß** die Führung (6) auf dem Halsteil (5) unverlierbar gehalten ist.

9. Zahnbürste nach einem der Ansprüche 3 bis 7, **dadurch gekennzeichnet, daß** die Führung (6) eine umfangseitig offene Durchtrittsöffnung (7) für den Halsteil (5) bildet und unter einer elastischen Aufweitung der Durchtrittsöffnung (7) quer zum Halsteil (5) auf diesen aufsteckbar ist.

## Claims

1. A toothbrush with a handle (4), with a brush head (2) connected to the handle (4) via a neck part (5), and with a guide (6) which engages with clearance for movement around the neck part (5), **characterised in that** the guide (6) forms a bite abutment.

2. A toothbrush according to claim 1, **characterised in that** the guide (6) comprises a support projection (10) directed away from the neck part (5).

3. A toothbrush according to claim 1 or 2, **characterised in that** the guide (6) forms a passage opening (7) for the neck part (5) and **in that** the axial guide length of the passage opening (7) is smaller than the length of the neck part (5).

4. A toothbrush according to claim 3, **characterised in that** the passage opening (7) of the guide (6) widens out conically both towards the brush head (2) and towards the handle (4).

5. A toothbrush according to any one of claims 1 to 4, **characterised in that** the guide (6) comprises at least one bite recess (11, 12).

6. A toothbrush according to claim 5, **characterised in that** the bite recesses (11) extend transversely of the neck part (5).

7. A toothbrush according to claim 5 or 6, **characterised in that** at least one bite recess (12) is provided on the support projection (10) in the longitudinal direction of the neck part (5).

8. A toothbrush according to any one of claims 1 to 7, **characterised in that** the guide (6) is held captive on the neck part (5).

9. A toothbrush according to any one of claims 3 to 7, **characterised in that** the guide (6) forms a peripherally open passage opening (7) for the neck part (5) and is adapted to be pushed on to the neck part (5) with elastic expansion of the passage opening (7) transversely of the neck part (5).

## Revendications

1. Brosse à dents avec un manche (4), une tête de brosse (2), reliée au manche (4) par l'intermédiaire d'une partie col (5), et avec un guidage (6) entourant la partie col (5) avec un jeu de mouvement, **caractérisée en ce que** le guidage (6) forme un contre-appui de morsure.

2. Brosse à dents selon la revendication 1, **caractérisée en ce que** le guidage (6) présente un appendice de fixation (10) s'écartant de la partie col (5).

3. Brosse à dents selon la revendication 1 ou 2, **caractérisée en ce que** le guidage (6) forme une ouverture de passage (7) pour la partie col (5), et **en ce que** la longueur de guidage axiale de l'ouverture de passage (7) est inférieure à la longueur de la partie col (5).

4. Brosse à dents selon la revendication 3, **caractérisée en ce que** l'ouverture de passage (7) du guidage (6) va en s'élargissant de façon conique, tant en direction de la tête de brosse (2), qu'également en direction du manche (4).

5. Brosse à dents selon l'une des revendications 1 à 4, **caractérisée en ce que** le guidage (6) présente au moins un évidement de morsure (11, 12).

6. Brosse à dents selon la revendication 5, **caractérisée en ce que** les évidements de morsure (11) s'étendent transversalement par rapport à la partie col (5).

7. Brosse à dents selon la revendication 5 ou 6, **caractérisée en ce qu'**au moins un évidement de morsure (12) est prévu dans la direction longitudinale de la partie col (5), sur l'appendice de fixation (10).

8. Brosse à dents selon l'une des revendications 1 à 7, **caractérisée en ce que** le guidage (6) est maintenu de façon imperdable sur la partie col (5).

9. Brosse à dents selon l'une des revendications 3 à 7, **caractérisée en ce que** le guidage (6) forme une ouverture de passage (7) ouverte en périphérie pour la partie col (5) et est susceptible d'être enfiché sur celle-ci avec élargissement élastique de l'ouverture de passage (7), transversalement par rapport à la partie col (5).
